# EUROPEAN PATENT SPECIFICATION

(11) **EP 2 351 505 B1**
(45) Date of publication and mention of the grant of the patent: **23.10.2013**
(21) Application number: 09823380.2
(22) Date of filing: 18.06.2009
(51) Int. Cl.: A47L 9/28, A47L 9/00, F04D 27/00, H02P 5/00

(54) **VACUUM CLEANER**
STAUBSAUGER
ASPIRATEUR

(30) Priority: 31.10.2008 JP 2008281795
(43) Date of publication of application: 03.08.2011
(73) Proprietor: Kabushiki Kaisha Toshiba, Minato-ku Tokyo 105-8001 (JP); Toshiba Consumer Electronics Holdings Corporation, Tokyo 101-0021 (JP); Toshiba Home Appliances Corporation, Tokyo 101-0021 (JP)
(72) Inventor: HOSHINO, Susumu, Tokyo 105-8001 (JP); HANZAWA, Makio, Tokyo 105-8001 (JP); MURAKAMI, Minoru, Tokyo 105-8001 (JP); HIDAKA, Toshinobu, Tokyo 105-8001 (JP)
(74) Representative: O'Connell, David Christopher
(86) International application number: PCT/JP2009/061078
(87) International publication number: WO 2010/050267

(56) References cited:
- WO-A1-00/59357
- DE-A1- 19 802 711
- DE-C- 948 636
- JP-A- 1 138 369
- JP-A- 2006 255 112
- JP-A- 2007 020 765
- US-B1- 6 260 235

## Description

### TECHNICAL FIELD

The present invention relates to an electric vacuum cleaner including a plurality of electric blowers.

### BACKGROUND ART

Conventionally, an electric vacuum cleaner of this type includes a cleaner main body housing a plurality of, for example, two electric blowers inside. The suction side of each electric blower is communicatively connected to a dust collecting chamber partitioned in a front portion of the cleaner main body. Inside the cleaner main body, a control means for each electric blower, that is, two control means are provided for controlling driving of the electric blowers, one for each corresponding to the respective electric blower, and the operations of the control means are controlled according to an operation mode set by a cleaning operator (for example, refer to Patent document 1).

### CITATION LIST

### Patent Literature

PTL1: Japanese Laid-Open Patent Publication No. 2007-20765 (page 5, Figs. 1 and 2).

Another electric vacuum cleaner is disclosed in DE-C-948636.

### SUMMARY OF THE INVENTION

### Technical Problem

However, in the above-described electric vacuum cleaner, an input of each electric blower is a fixed value set in advance according to an operation mode, so that, for example, in the case of an operation mode in which only one electric blower is actuated, only an electric blower determined in advance is always driven, and when the electric vacuum cleaner is used over a long period of time, this electric blower may reach the end of its life earlier than the other electric blower and may no longer be driven.

In such a case where an electric vacuum cleaner includes a plurality of electric blowers, when at least some of the electric blowers can no longer be driven, an operation mode in which all electric blowers are actuated becomes unusable, and the electric vacuum cleaner cannot function as a vacuum cleaner.

The present invention has been made in view of these circumstances, and an object thereof is to provide an electric vacuum cleaner whose use life can be improved by making uniform the cumulative operation times of the electric blowers.

### Solution to Problem

An electric vacuum cleaner according to the present invention includes a cleaner main body housing a plurality of electric blowers and a control means capable of controlling driving of the electric blowers independently of each other, wherein the control means has a first mode in which other remaining electric blowers than at least any one of the electric blowers are actuated, and a second mode in which all electric blowers are actuated, and when switching from the second mode to the first mode, the control means actuates at least any one of the electric blowers which were not actuated in the previous first mode.

Further, the electric vacuum cleaner according to the present invention includes a storage means for respectively storing cumulative operation times of the electric blowers, the control means has a first mode in which other remaining electric blowers than at least any one of the electric blowers are actuated, and a second mode in which all electric blowers are actuated, and when switching from the second mode to the first mode, the control means actuates at least an electric blower whose cumulative operation time stored in the storage means is the shortest.

### Advantageous Effects of the Invention

According to the present invention, when the control means performs switching from the second mode in which all electric blowers are actuated to the first mode in which other remaining electric blowers than at least any one of the electric blowers are actuated alone, by actuating at least any one of the electric blowers which were not actuated in the previous first mode, the cumulative operation times of the electric blowers can be made uniform and the use life can be improved.

Also, according to the present invention, when the control means performs switching from the second mode in which all electric blowers are actuated to the first mode in which other remaining electric blowers than at least any one of the electric blowers are actuated, by actuating at least an electric blower whose cumulative operation time stored in the storage means is the shortest, the cumulative operation times of the electric blowers can be made uniform and the use life can be improved.

### BRIEF DESCRIPTION OF THE DRAWINGS

Fig. 1 is a block diagram showing an electric vacuum cleaner according to a first embodiment of the present invention.
Fig. 2 (a) is an explanatory plan view showing an operation state of an electric blower of the same electric vacuum cleaner, Fig. 2(b) is an explanatory plan view showing an operation state of another electric blower of the same electric vacuum cleaner, and Fig. 2(c) is an explanatory plan view showing an operation state of all electric blowers of the same electric vacuum cleaner.
Fig. 3 is a perspective view showing the same electric vacuum cleaner.
Fig. 4 is an explanatory view showing transition of an operation state of the same electric vacuum cleaner.
Fig. 5 is a graph showing inputs in the operation states of the same electric vacuum cleaner.
Fig. 6 is an explanatory view showing transition of the operation state of an electric vacuum cleaner according to a second embodiment of the present invention.
Fig. 7 is a block diagram showing an electric vacuum cleaner according to a third embodiment of the present invention.
Fig. 8 is an explanatory view showing transition of the operation state of the same electric vacuum cleaner.
Fig. 9 is an explanatory view showing transition of the operation state of an electric vacuum cleaner according to a fourth embodiment of the present invention.

### DESCRIPTION OF EMBODIMENTS

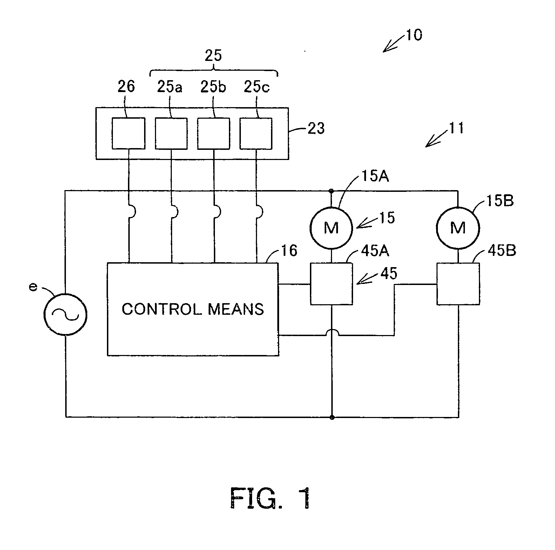

Hereinafter, an electric vacuum cleaner according to a first embodiment of the present invention will be described with reference to Fig. 1 to Fig. 5.

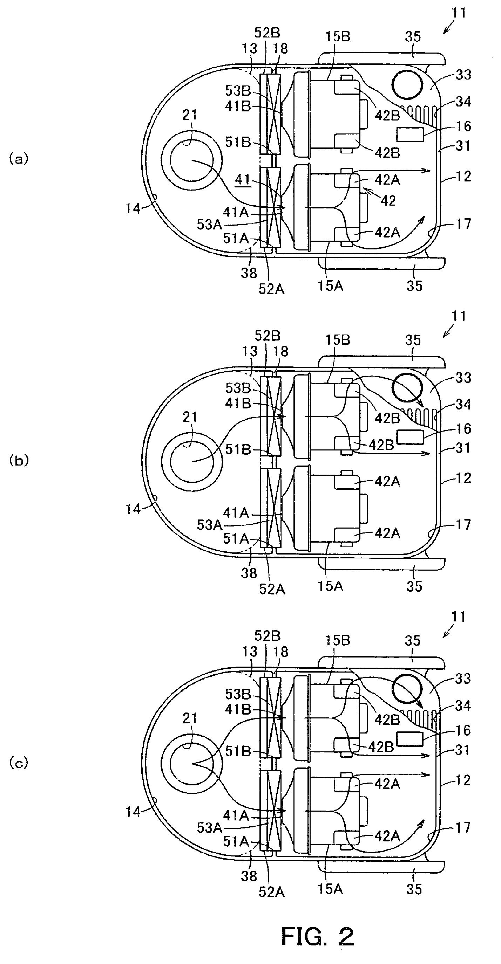

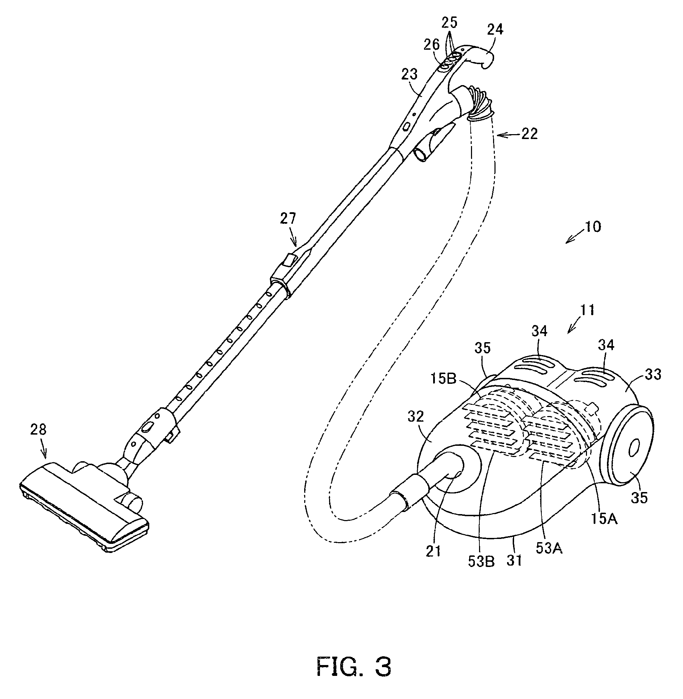

In Figs. 2 and Fig. 3, the reference numeral 10 denotes a so-called canister type electric vacuum cleaner, and this electric vacuum cleaner 10 includes a cleaner main body 11. This cleaner main body 11 includes a hollow main body case 12, and the inside of the main body case 12 is partitioned by a partition part 18 into a dust collecting chamber 14 which is positioned at the front side and to which a dust collecting bag 13 as a filter is detachably attached, and an electric blower chamber 17 which is positioned at the rear side and houses a plurality of, for example, two electric blowers 15A and 15B (hereinafter, at least any one or all of these electric blowers 15A and 15B may be simply referred to as an electric blower 15), a control means 16, and a cord reel (not shown). In the front portion of the main body case 12, a main body suction port 21 which is communicatively connected to the dust collecting chamber 14 is opened, and to this main body suction port 21, a hose body 22 as a bendable narrow and long substantially cylindrical connecting tube is communicatively connected. Further, on the tip end of the hose body 22, a tubular hand operation part 23 is provided, and on this hand operation part 23, a grip part 24 to be gripped by an operator when cleaning is provided so as to project on the base end side, and on this grip part 24, a plurality of, for example, three setting buttons 25a, 25b, and 25c (hereinafter, at least any one or all of these setting buttons 25a, 25b, and 25c may be simply referred to as a setting button 25) for setting a driving state, that is, an operation mode of the electric blowers 15, etc., to a predetermined state, and an ON/OFF button 26 for turning the power supply ON/OFF, are provided respectively. To the tip end of the hand operation part 23, an extensible narrow and long substantially cylindrical extension tube 27 is detachably communicatively connected. Further, to the tip end of the extension tube 27, a floor brush 28 as a suction port body which is set on, for example, a carpet, etc., on a floor surface as a surface to be cleaned in a room and suctions dust on the carpet, is detachably communicatively connected.

The main body case 12 includes a lower case 31 which is provided with a partition part 18 and opened upward, a lid body 32 which opens and closes an upper portion of the dust collecting chamber 14 that is the front side of the lower case 31, and an upper case 33 which closes the upper portion of the electric blower chamber 17 that is the rear side of the lower case 31. In the main body case 12, a large number of exhaust holes 34 are opened.

On both side portions of the electric blower chamber 17 on the rear side of the lower case 31, large diameter traveling wheels 35 for making the cleaner main body 11 travel on a floor surface are axially supported turnably, and on a bottomportion opposed to the floor surface of the dust collecting chamber 14 on the front side, a turning wheel (not shown) as a driven wheel is provided turnably.

The dust collecting bag 13 is, for example, a disposable paper pack, and has a mouth frame (not shown) to be fixed to the dust collecting chamber 14 and a bag-shaped bag body 38 attached to the mouth frame.

The dust collecting chamber 14 is formed commonly to the electric blowers 15A and 15B.

The electric blowers 15A and 15B have suction ports 41A and 41B airtightly connectable to the dust collecting chamber 14 on their front ends, and a plurality of exhaust ports 42A and 42B in the outer peripheral surfaces on the rear end sides, are disposed side by side to each other in the width direction in the electric blower chamber 17. Hereinafter, at least any one or all of the suction ports 41A and 41B may be referred to as a suction port 41, and at least any one or all of the exhaust ports 42A and 42B may be simply referred to as an exhaust port 42.

As shown in Fig. 1, the control means 16 is a circuit board including switching elements 45A and 45B (hereinafter, at least any one or all of the switching elements 45A and 45B may be simply referred to as a switching element 45) such as triacs corresponding to the electric blowers 15A and 15B, and is arranged so as to drive the electric blowers 15A and 15B independently of each other by phase-angle control, etc., according to an operation mode input by the setting button 25. For example, the control means 16 performs automatic switching control so that, when an operation mode as a first mode in which the suctioning power is relatively small such as a medium mode or a weak mode (an operation mode with suctioning power not more than half the full power) is selected by the setting button 25b or 25c, other remaining electric blowers than at least any one of the electric blowers 15 are driven (either one of the electric blowers 15A and 15B is driven and the other one of the electric blowers 15A and 15B is stopped), and when an operation mode as a second mode with relatively high suctioning power such as a strong mode (an operation mode with suctioning power higher than half the full power) is selected by the setting button 25a, all of the electric blowers 15 are driven (electric blowers 15A and 15B are driven concurrently).

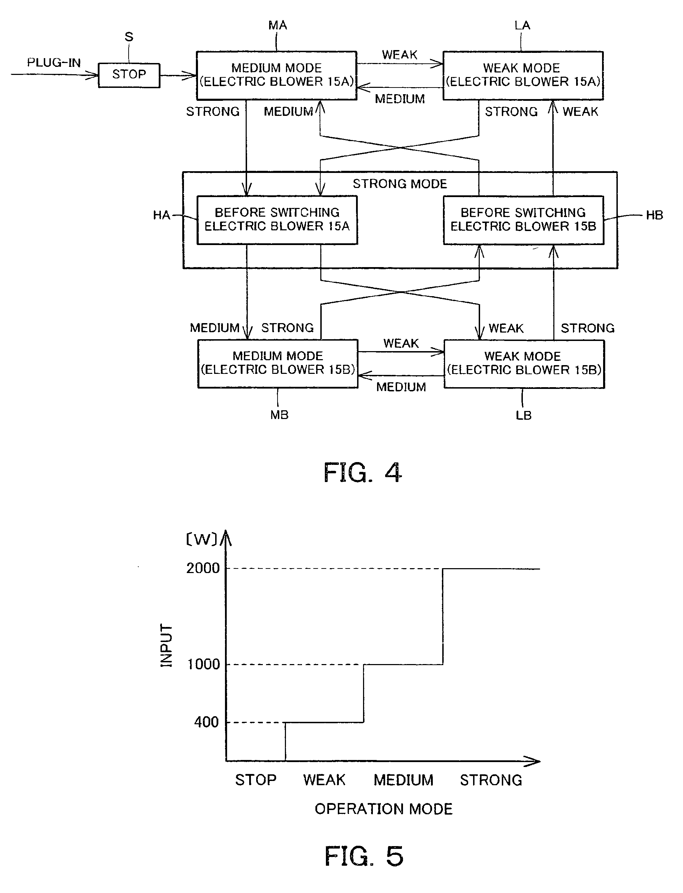

For example, as shown in the graph of Fig. 5, in the strong mode (full power), the control means 16 actuates both electric blowers 15A and 15B with an input of 1000W, in the medium mode, the control means actuates either of the electric blowers 15A and 15B with an input of 1000W, and in the weak mode, the control means actuates either of the electric blowers 15A and 15B with an input of 400W. Specifically, in the medium mode and the weak mode, either one of the electric blowers 15 is actuated alone. These input values are increased or decreased in an input range set in advance in each operation mode according to a dust amount trapped in the dust collecting bag 13.

Around the cord reel, a power cord (not shown) having a plug part to be connected to a commercial AC power supply e on the tip end portion is wound so as to be led out.

On the other hand, the electric blower chamber 17 is formed commonly to the electric blowers 15A and 15B, and is communicatively connected to the outside of the main body case 12 via the exhaust holes 34.

In the partition part 18, circular hole-shaped large diameter communication holes 51A and 51B which communicatively connect the dust collecting chamber 14 and the electric blower chamber 17 are opened at positions opposed to the front sides of the electric blowers 15A and 15B, and to the front portions that are the upstream sides of these communication holes 51A and 51B, filters 52A and 52B are attached respectively, and to the rear portions of the communication holes 51A and 51B, backflow preventing valve units 53A and 53B which are opening and closing means as backflow preventing means are attached between the suction ports 41A and 41B of the electric blowers 15A and 15B.

The front portions that are the upstream sides of the communication holes 51A and 51B are covered by filters 52A and 52B.

The filters 52A and 52B are for trapping dust which could not be trapped in the dust collecting bag 13.

The backflow preventing valve units 53A and 53B are arranged so that the backflow preventing valve unit 53A or 53B is opened by a negative pressure caused when the corresponding electric blower 15 is driven, and is closed when the corresponding electric blower 15 is stopped, and is closed by a negative pressure caused by driving of the other electric blower 15 when the other electric blower 15 is driven. Specifically, the backflow preventing valve units 53A and 53B can be opened and closed by a pressure difference (wind) between the upstream side and the downstream side.

Next, operations of the first embodiment mentioned above will be described.

First, when a new dust collecting bag 13 is used, the dust collecting bag 13 is attached to the dust collecting chamber 14 exposed by opening the lid body 32, and after the lid body 32 is closed, the power cord is pulled out and the plug part on the tip end portion is connected to an outlet (commercial AC power supply e) (plug-in). When the dust collecting bag 13 is not renewed, without opening and closing the lid body 32, the power cord is pulled out and the plug part is connected to the outlet (commercial AC power supply e).

Then, the grip part 24 on the hand operation part 23 of the hose body 22 connected to the main body suction port 21 is gripped, and by operating the ON/OFF button 26 from the stopped state S of the electric blower 15, the control means 16 inside the cleaner main body 11 performs phase-angle control of the operation of the electric blower 15 by the switching element 45 to generate a negative pressure.

At this time, as shown in Fig. 4, the control means 16 actuates the electric blower 15 in the medium mode. Here, for convenience of description, it is assumed that the electric blower 15A is actuated (operation state MA (Fig. 2(a)).

From this operation state MA of the medium mode, when an operator operates, for example, the setting button 25c, the control means 16 switches the operation state to the weak mode by changing the input of the electric blower 15A to, for example, 400W (operation state LA). When the operator operates the setting button 25b from this operation state LA of this weak mode, the control means 16 switches the operation state to the operation state MA of the medium mode by changing the input of the electric blower 15A to, for example, 1000W.

Further, when the operator operates the setting button 25a from the operation state LA or the operation state MA, the control means 16 changes the inputs of the electric blowers 15A and 15B to 1000W to switch the operation state to the operation state HA of the strong mode in which the electric blower 15A had been actuated before switching (Fig. 2(c)).

From this operation state HA, when the operator operates the setting button 25b or the setting button 25c, the control means 16 stops the electric blower 15A, and switches the operation state to the operation state MB of the medium mode in which the input of the electric blower 15B is 1000W or the operation state LB of the weak mode in which the input of the electric blower 15B is 400W (Fig. 2(b)).

Further, from the operation state MB of the medium mode, when the operator operates the setting button 25c, the control means 16 switches the operation mode to the operation mode LB of the weak mode by changing the input of the electric blower 15B to 400W. Similarly, from the operation state LB of the weak mode, when the operator operates the setting button 25b, the control means 16 switches the operation state to the operation state MB of the medium mode by changing the input of the electric blower 15B to 1000W.

Further, from the operation state LB or the operation state MB, when the operator operates the setting button 25a, the control means 16 switches the operation state to the operation state HB of the strong mode in which the electric blower 15B had been actuated before switching by changing the inputs of the electric blowers 15A and 15B to 1000W (Fig. 2(c)).

Then, from this operation state HB, when the operator operates the setting button 25b or the setting button 25c, the control means 16 stops the electric blower 15B and switches the operation state to the operation state MA of the medium mode in which the input of the electric blower 15A is 1000W or the operation state LA of the weak mode in which the input of the electric blower 15A is 400W (Fig. 2(a)).

Specifically, once after switching to the strong mode, when the control means 16 performs switching from this strong mode to the medium mode or the weak mode, the control means 16 actuates the electric blower 15 on the opposite side from the electric blower 15 which had been actuated just before this switching. In other words, when switching from the strong mode (operation mode in which all electric blowers 15 are actuated) to the medium mode or the weak mode (operation mode in which either one of the electric blowers 15 is actuated), the control means 16 switches the electric blower 15 to be actuated.

The backflow preventing valve units 53A and 53B are arranged so that both backflow preventing valve units 53A and 53B open in the operation state HA or HB of the strong mode in which both electric blowers 15A and 15B are actuated, only the backflow preventing valve unit 53A opens and the backflow preventing valve unit 53B closes in the operation state MA of the medium mode or the operation state LA of the weak mode in which only the electric blower 15A is actuated, and only the backflow preventing valve unit 53B opens and the backflow preventing valve unit 53A closes in the operation state MB of the medium mode or the operation state LB of the weak mode in which only the electric blower 15B is actuated.

Then, when the operator makes the floor brush 28 connected to the tip end side of the hose body 22 via an extension tube 27 travel forward and backward on a floor surface, etc., by the grip part 24 that the operator grips, the air suctioned together with dust from the tip end of the floor brush 28 due to a negative pressure of the electric blower 15 becomes suctioning wind, and is suctioned together with dust into the dust collecting bag 13 via the extension tube 27, the hose body 22, and the main body suction port 21, and when passing through the bag body 38 of the dust collecting bag 13, dust contained in the suctioning wind is trapped.

The air that passed through the bag body 38 is suctioned into the suction port 41 of the electric blower 15 via the communication hole after passing through the filter, and passes through the inside of the electric blower 15 and is then exhausted as exhaust wind from the exhaust port 42, and exhausted to the outside of the main body case 12 from the electric blower chamber 17 via the exhaust holes 34.

As described above, in the first embodiment mentioned above, when switching from the strong mode in which all electric blowers 15 are actuated to the medium mode or the weak mode in which the electric blower 15A or the electric blower 15B is actuated alone, the control means 16 switches the electric blower 15 to be actuated.

When the electric vacuum cleaner 10 including a plurality of electric blowers 15 has an operation mode in which other remaining electric blowers 15 than at least any one of the electric blowers 15 are actuated (for example, either one of the electric blowers 15A and 15B is actuated alone), control is conventionally performed to actuate predetermined electric blowers in this operation mode, and on the other hand, in the above-described first embodiment, at least any one of the electric blowers 15 which were not actuated last time, here, the electric blower 15 which was not actuated last time, is actuated, so that concentrative actuation of a predetermined electric blower 15 is prevented, and the cumulative operation times of the electric blowers 15 can be made uniform.

As a result, when the electric vacuum cleaner 10 is used over a long period of time, either of the electric blowers 15 can be prevented from reaching the end of its life earlier than the other electric blowers 15, and accordingly, the operation mode (strong mode) in which all electric blowers 15 are actuated can be prevented from becoming unusable and the electric vacuum cleaner 10 can be prevented from becoming unable to function, and therefore, the use life can be further improved.

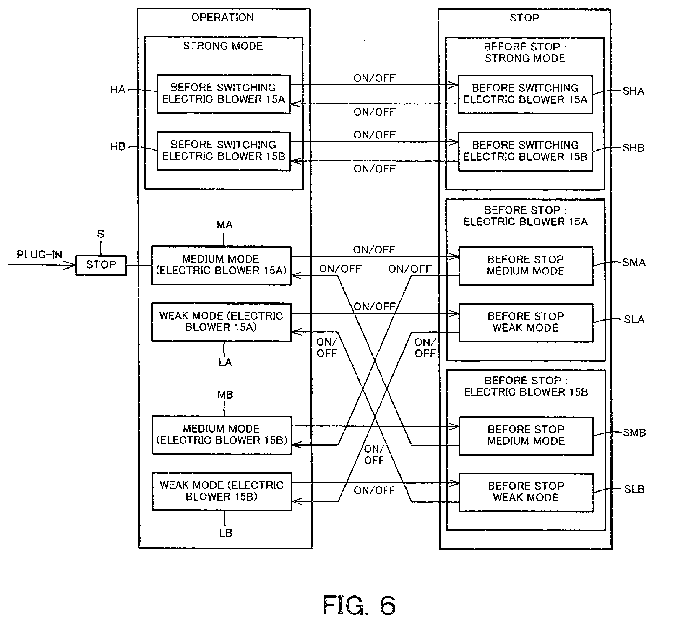

Next, a second embodiment will be described with reference to Fig. 6. The same components and operations as those in the first embodiment described above are provided with the same reference numerals, and description thereof will be omitted.

According to this second embodiment, in addition to the above-described first embodiment, each time of operation start in the medium mode or the weak mode, that is, an operation mode in which other remaining electric blowers 15 than at least any one of the electric blowers 15 are actuated (for example, an operation mode in which either of the electric blowers 15 is actuated alone), the control means 16 actuates at least any one of the electric blowers 15 which were not actuated last time, here, an electric blower 15 which was not actuated last time.

Specifically, as shown in Fig. 6, when the operator operates the ON/OFF button 26 from the operation state MA of the medium mode, the control means 16 switches the operation state to a stopped state SMA in which the electric blower 15A had been actuated in the medium mode before it was switched, by changing the input of the electric blower 15A to 0 . Similarly, when the operator operates the ON/OFF button 26 from the operation state LA of the weak mode, the control means 16 switches the operation state to a stopped state SLA in which the electric blower 15A had been actuated in the weak mode before it was switched, by changing the input of the electric blower 15A to 0.

Further, when the operator operates the ON/OFF button 26 from the stopped state SMA, the control means 16 switches the stopped state to the operation state MB of the medium mode by changing the input of the electric blower 15B to, for example, 1000W. Similarly, when the operator operates the ON/OFF button 26 from the stopped state SLA, the control means 16 switches the stopped state to the operation state LB of the weak mode by changing the input of the electric blower 15B to, for example, 400W.

When the operator operates the ON/OFF button 26 from the operation state MB of the medium mode, the control means 16 switches the operation state to a stopped state SMB in which the electric blower 15B had been actuated in the medium mode before it was switched, by changing the input of the electric blower 15B to 0. Similarly, when the operator operates the ON/OFF button 26 from the operation state LB of the weak mode, the control means 16 switches the operation state to a stopped state SLB in which the electric blower 15B had been actuated in the weak mode before it was switched, by changing the input of the electric blower 15B to 0.

Further, when the operator operates the ON/OFF button 26 from the stopped state SMB, the control means 16 switches the stopped state to the operation state MA of the medium mode by changing the input of the electric blower 15A to, for example, 1000W. Similarly, when the operator operates the ON/OFF button 26 from the stopped state SLB, the control means 16 switches the stopped state to the operation state LA of the weak mode by changing the input of the electric blower 15A to, for example, 400W.

When the operator operates the ON/OFF button 26 from the operation state HA of the strong mode, the control means 16 switches the operation state to the stopped state SHA in which the electric blower 15A had been actuated before the strong mode was switched, by changing the inputs of the electric blowers 15A and 15B to 0. Similarly, when the operator operates the ON/OFF button 26 from the operation state HB of the strong mode, the control means 16 switches the operation state to the stopped state SHB in which the electric blower 15B had been actuated before the strong mode was switched, by changing the inputs of the electric blowers 15A and 15B to 0.

Further, when the operator operates the ON/OFF button 26 from the stopped state SHA, the control means 16 switches the stopped state to the operation state HA of the strong mode in which the electric blower 15A had been actuated before it was switched, by changing the inputs of the electric blowers 15A and 15B to, for example, 1000W. Similarly, when the operator operates the ON/OFF button 26 from the stopped state SHB, the control means 16 switches the stopped state to the operation state HB of the strong mode in which the electric blower 15B had been actuated before it was switched, by changing the inputs of the electric blowers 15A and 15B to, for example, 1000W.

As described above, each time the control means 16 starts operation in an operation mode in which other remaining electric blowers 15 than at least any one of the electric blowers 15 are actuated, such as the medium mode or the weak mode (for example, an operation mode in which either of the electric blowers 15 is actuated alone), by actuating at least any one of the electric blowers 15 that were not actuated last time, here, the electric blower 15 that was not actuated last time, concentrative actuation of only a predetermined electric blower 15 can be more reliably prevented, and the cumulative operation times of the electric blowers 15 are made more uniform, and the use life can be further improved.

In each embodiment described above, when the ON/OFFbutton 26 is operated from a stopped state S, the stopped state can be switched to an arbitrary operation state besides switching to the operation state MA of the medium mode.

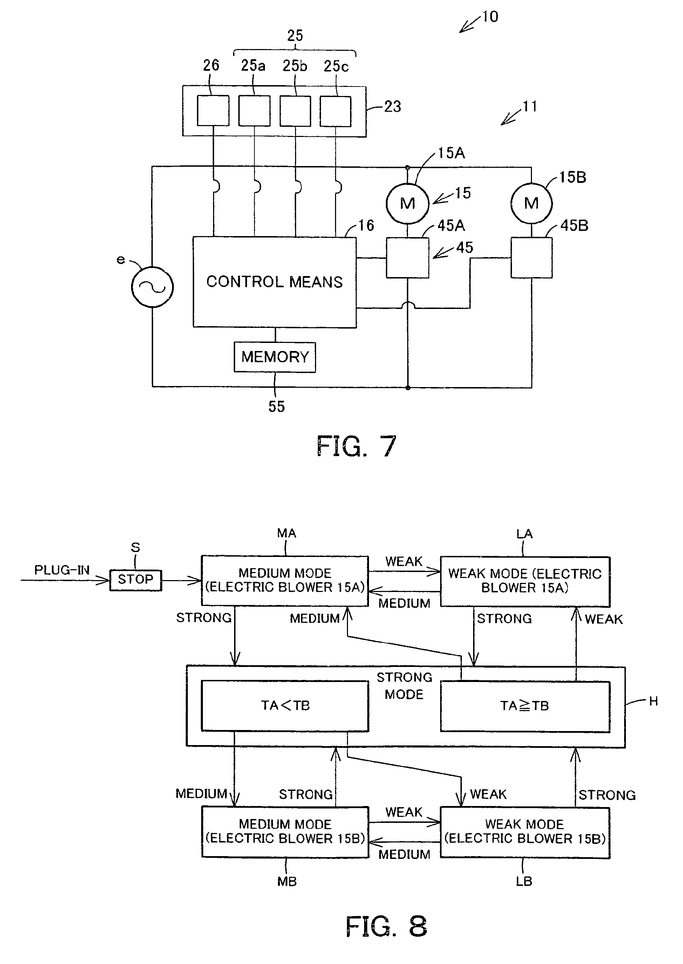

Next, a third embodiment will be described with reference to Fig. 7 and Fig. 8. The same components and operations as those in the embodiments described above will be provided with the same reference numerals, and description thereof will be omitted.

According to this third embodiment, in the first embodiment described above, the electric vacuum cleaner 10 includes a memory 55 as a storage means as shown in Fig. 7.

The memory 55 is connected to the control means 16, and stores cumulative operation times TA and TB (hereinafter, at least any one or all of the cumulative operation times TA and TB may be simply referred to as a cumulative operation time T), etc., of the electric blowers 15A and 15B. This memory 55 is nonvolatile, so that stored contents are not lost even if the plug part of the power cord is disconnected from the outlet (commercial AC power supply e).

Here, the cumulative operation times TA and TB of the electric blowers 15A and 15B stored in the memory 55 may be calculated by simply accumulating (summing) the operation times t1A and t1B of the electric blowers 15A and 15B (TA = Σ(t1A), TB = Σ(t1B)), or accumulating (summing) corrected operation times t2A and t2B obtained by correcting the operation times t1 of the electric blowers 15A and 15B corresponding to the operation modes of the electric blowers 15A and 15B (TA = Σ(t2A), TB = Σ(t2B)).

Specifically, there is a difference in load to be applied to the electric blower 15 between the case where the electric blower 15 is actuated in the weak mode (for example, 400W) and the case where the electric blower 15 is actuated in the medium mode or the strong mode (for example, 1000W), so that by multiplying the operation time t1 by a predetermined coefficient α_{M} set in advance corresponding to each operation mode, the control means 16 calculates the corrected operation times t2A (= t1A×α_{M}) and t2B (= t1B×α_{M}). Here, the coefficient α_{M} is a nonnegative number that is 1 in an operation mode in which the load of the electric blower 15 is the largest, and decreases according to reduction in load of the electric blower 15. Specifically, the coefficient α_{M} satisfies 0 < α_{M} ≤ 1.

Although the load of electric blower 15 is larger when the input is approximately 90% of the maximum rated power than when the input is the maximum rated power (for example, 1000W), however, in the above-described second embodiment, the operation modes are only operation modes (the strong mode and the medium mode) in which the input is the maximum rated power and an operation mode (the weak mode) in which the input is less than half the maximum rated power, so that the coefficient α_{M} is 1 in the operation in the strong mode and the medium mode, and the coefficient α_{M} is approximately 0.4 in the operation in the weak mode.

Then, the power cord is pulled out and the plug part on the tip end portion is connected (plug-in) to the outlet (commercial AC power supply e), and by operating the ON/OFF button 26 from the stopped state S of the electric blower 15, the control means 16 inside the cleaner main body 11 performs phase-angle control of the operation of the electric blower 15 by the switching element 45 to generate a negative pressure.

At this time, as shown in Fig. 8, the control means 16 actuates the electric blower 15 in the medium mode. Here, for convenience of description, it is assumed that the electric blower 15A is actuated (operation state MA).

From the operation state MA of the medium mode, when the operator operates, for example, the setting button 25c, the control means 16 switches the operation state to the weak mode by changing the input of the electric blower 15A to, for example, 400W (operation state LA). When the operator operates the setting button 25b from the operation state LA of the weak mode, the control means 16 switches the operation state to the operation state MA of the medium mode by changing the input of the electric blower 15A to, for example, 1000W.

Further, from the operation state LA or the operation state MA, when the operator operates the setting button 25a, the control means 16 switches the operation state to the operation state H of the strong mode by changing the inputs of the electric blowers 15A and 15B to, for example, 1000W.

From this operation state H, when the operator operates the setting button 25b or the setting button 25c, the control means 16 actuates at least an electric blower 15 whose cumulative operation time T is the shortest by referring to the cumulative operation times TA and TB stored in the memory 55.

In detail, by changing the input of at least any one of the electric blowers 15 whose cumulative operation times T are not the shortest to 0, this electric blower 15 is stopped, and the input of the electric blower 15 whose cumulative operation time T is the shortest is set to a predetermined value. In the present embodiment, an operation state of the medium mode in which the input of the electric blower 15 whose cumulative operation time T is greater is changed to 0, and the input of the electric blower 15 whose cumulative operation time T is the shortest is changed to, for example, 1000W, or an operation state of the weak mode in which the input of the electric blower 15 whose cumulative operation time is the shortest is set to, for example, 400W, is set.

For example, when the cumulative operation time TA is not less than the cumulative operation time TB (TA ≥ TB), the control means 16 switches the operation state to an operation state MB of the medium mode in which the input of the electric blower 15A is 0 and the input of the electric blower 15B is, for example, 1000W, or an operation state LB of the weak mode in which the input of the electric blower 15B is, for example, 400W. On the other hand, when the cumulative operation time TB is greater than the cumulative operation time TA (TA < TB), the control means 16 switches the operation state to the operation state MA of the medium mode in which the input of the electric blower 15B is 0 and the input of the electric blower 15A is, for example, 1000W, or the operation state LA of the weak mode in which the input of the electric blower 15A is, for example, 400W.

From the operation state MB, when the operator operates, for example, the setting button 25c, the control means 16 switches the operation state to the weak mode by changing the input of the electric blower 15B to, for example, 400W (operation state LB). From this operation state LB of the weak mode, when the operator operates the setting button 25b, the control means 16 switches the operation state to the operation state MB of the medium mode by changing the input of the electric blower 15B to, for example, 1000W.

Further, from the operation state LB or the operation state MB, when the operator operates the setting button 25a, the control means 16 switches the operation state to the operation state H of the strong mode by changing the inputs of the electric blowers 15A and 15B to, for example, 1000W.

Thus, when the control means 16 performs switching from the strong mode in which all electric blowers 15 are actuated to the medium mode in which other remaining electric blowers 15 than at least any one of the electric blowers 15 are actuated or the weak mode (for example, an operation mode in which either of the electric blowers 15 is actuated alone), by actuating at least the electric blower 15 whose cumulative operation time T stored in the memory 55 is the shortest, the cumulative operation times T of the electric blowers 15 can be made uniform.

As a result, when the electric vacuum cleaner 10 is used over a long period of time, by preventing a predetermined electric blower 15 from reaching the end of its life earlier than other electric blowers 15, the operation mode (strong mode) in which all electric blowers 15 are actuated can be prevented from becoming unusable and the electric vacuum cleaner 10 can be prevented from becoming unable to function, so that the use life can be further improved.

When calculating the cumulative operation times T of the electric blowers 15A and 15B by using corrected operation times t2A and t2B corrected according to the coefficient α_{M} by making the operation times t1A and t1B of the electric blowers 15A and 15B correspondent to the inputs set in the operations, the control means 16 can properly calculate the cumulative operation times T corresponding to the substantial loads of the electric blowers 15, so that the cumulative operation times T of the electric blowers 15 can be made more uniform.

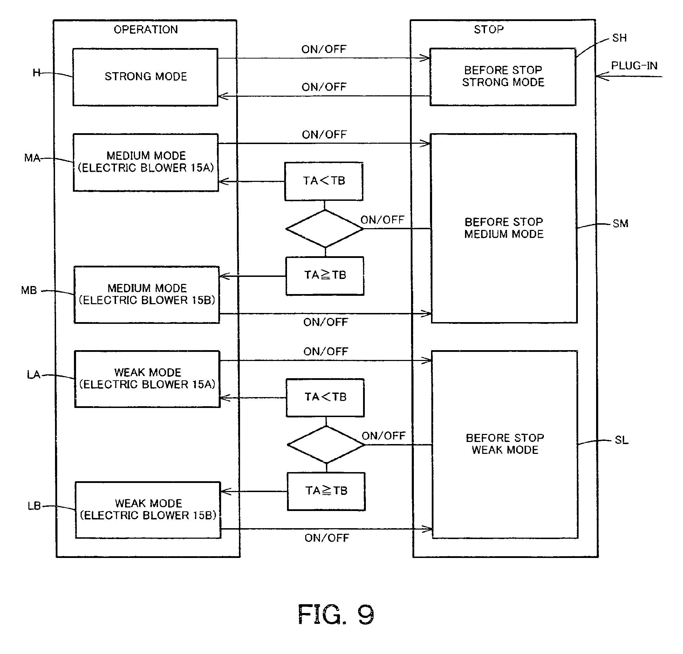

Next, a fourth embodiment will be described with reference to Fig. 9. The same components and operations as those in the third embodiment described above will be provided with the same reference numerals, and description thereof will be omitted.

According to this fourth embodiment, instead of the stopped state S of the above-described third embodiment, stopped states SH, SM, and SL corresponding to the previously actuated operation modes are provided.

Specifically, regardless of whether the plug part of the power cord has been once disconnected from an outlet (commercial AC power supply e), in a stopped state of the electric blower 15 while the plug part of the power cord is connected to an outlet (commercial AC power supply e), when the previous operation mode is the strong mode, the stopped state SH is selected, and when the previous operation mode is the medium mode, the stopped state SM is selected, and when the previous operation mode is the weak mode, the stopped state SL is selected in the stopped state of the electric blower 15.

In the stopped state SH, when the operator operates the ON/OFF button 26, the control means 16 switches the stopped state to the operation state H of the strong mode by changing the inputs of the electric blowers 15A and 15B to, for example, 1000W. When the operator operates the ON/OFF button 26 from the operation state H of the strong mode, the control means 16 switches the operation state to the stopped state SH by changing the inputs of the electric blowers 15A and 15B to 0.

In the stopped state SM, when the operator operates the ON/OFF button 26, the control means 16 refers to the cumulative operation times TA and TB stored in the memory 55, and when the cumulative operation time TA is not less than the cumulative operation time TB (TA ≥ TB), the control means 16 switches the stopped state to the operation state MB of the medium mode in which the input of the electric blower 15A is 0 and the input of the electric blower 15B is, for example, 1000W, and when the cumulative operation time TB is greater than the cumulative operation time TA (TA < TB), the control means 16 switches the stopped state to the operation state MA of the medium mode in which the input of the electric blower 15B is 0 and the input of the electric blower 15A is, for example, 1000W.

When the operator further operates the ON/OFF button 26 from the operation state MA of the medium mode or the operation state MB of the medium mode, the control means 16 switches the operation state to the stopped state SM by changing the inputs of the electric blowers 15A and 15B to 0.

Further, in the stopped state SL, when the operator operates the ON/OFF button 26, the control means 16 refers to the cumulative operation times TA and TB stored in the memory 55, and when the cumulative operation time TA is not less than the cumulative operation time TB (TA ≥ TB), the control means 16 switches the stopped state to the operation state LB of the weak mode in which the input of the electric blower 15A is 0 and the input of the electric blower 15B is, for example, 400W, and when the cumulative operation time TB is greater than the cumulative operation time TA (TA < TB), the control means 16 switches the stopped state to the operation state LA of the weak mode in which the input of the electric blower 15B is 0 and the input of the electric blower 15A is, for example, 400W.

When the operator further operates the ON/OFF button 26 from the operation state LA of the weak mode or the operation state LB of the weak mode, the control means 16 switches the operation state to the stopped state SL by changing the inputs of the electric blowers 15A and 15B to 0.

Thus, when starting operation in an operation mode in which other remaining electric blowers 15 than at least any one of the electric blowers 15 are actuated such as the medium mode or the weak mode (for example, an operation mode in which either of the electric blowers 15 is actuated alone), by actuating at least the electric blower 15 whose cumulative operation time T stored in the memory 55 is the shortest, concentrative actuation of only a predetermined electric blower 15 is reliably prevented, cumulative operation times of the electric blowers 15 are made more uniform, and the use life can be further improved.

In the embodiments described above, the backflow preventing valve units 53A and 53B may be disposed on the exhaust sides of the electric blowers 15A and 15B respectively.

Further, the number and kinds of operation modes of the electric blowers 15 are not limited to those described above as long as a first mode in which other remaining electric blowers 15 than at least any one of the electric blowers 15 are actuated and a second mode in which all electric blowers 15 are actuated are at least provided.

The electric blower chamber 17 may be partitioned for each of the electric blowers 15A and 15B.

The number of electric blowers 15 provided may be three or more.

Further, the details of the electric vacuum cleaner 10 are not limited to those of the configuration described above.

The electric vacuum cleaner 10 is not limited to a canister type, and for example, an upright type having a floor brush 28 connected to a lower portion of the cleaner main body 11 or a handy type having a floor brush 28 connected to a front portion of the cleaner main body 11 can also be used.

### INDUSTRIAL APPLICABILITY

The present invention can be preferably applied to, for example, domestic electric vacuum cleaners.

### REFERENCE SIGNS LIST

- 10: Electric vacuum cleaner
- 11: Cleaner main body
- 15A, 15B: Electric blower
- 16: Control means
- 55: Memory as storage means

## Claims

1. An electric vacuum cleaner comprising:
a cleaner main body (11) housing a plurality of electric blowers (15A, 15B); and
a control means (16) capable of controlling driving of the electric blowers independently of each other, wherein
the control means (16) has a first mode in which other remaining electric blowers than at least any one of the electric blowers are actuated and a second mode in which all of the electric blowers are actuated, and when switching from the second mode to the first mode, actuates at least any one of the electric blowers which were not actuated in the previous first mode.

2. The electric vacuum cleaner according to Claim 1, wherein
the control means actuates at least any one of the electric blowers which were not actuated in the previous first mode each time of operation start in the first mode.

3. An electric vacuum cleaner comprising:
a cleaner main body (11) housing a plurality of electric blowers (15A, 15B);
a control means (16) capable of controlling driving of the electric blowers independently of each other; and
a storage means (55) for storing cumulative operation times of the electric blowers, wherein
the control means (16) has a first mode in which other remaining electric blowers than at least any one of the electric blowers are actuated and a second mode in which all of the electric blowers are actuated, and when switching from the second mode to the first mode, actuates at least the electric blower whose cumulative operation time stored in the storage means is the shortest.

4. The electric vacuum cleaner according to Claim 3, wherein
the control means actuates at least the electric blower whose cumulative operation time stored in the storage means is the shortest when starting operation in the first mode.

5. The electric vacuum cleaner according to Claim 3 or 4, wherein
the control means calculates the cumulative operation time by correcting an operation time of the electric blower by making the operation time correspondent to an input in the operation.

## Patentansprüche

1. Elektrischer Staubsauger, umfassend:
einen Staubsauger-Hauptkörper (11), der eine Anzahl elektrischer Gebläse (15A, 15B) enthält; und
eine Kontrollvorrichtung (16), die die elektrischen Gebläse unabhängig voneinander kontrollieren und ansteuern kann, wobei
die Kontrollvorrichtung (16) einen ersten Modus aufweist, in dem die anderen verbleibenden elektrischen Gebläse außer mindestens einem beliebigen elektrischen Gebläse betätigt werden, und einen zweiten Modus, in dem alle elektrischen Gebläse betätigt werden, und beim Umschalten aus dem zweiten Modus in den ersten Modus mindestens irgendeines der elektrischen Gebläse in Gang gesetzt wird, das im vorhergehenden ersten Modus nicht gearbeitet hat.

2. Elektrischer Staubsauger nach Anspruch 1, wobei die Kontrollvorrichtung bei jedem Betriebsstart im ersten Modus mindestens irgendeines der elektrischen Gebläse in Gang setzt, die im vorhergehenden ersten Modus nicht gearbeitet haben.

3. Elektrischer Staubsauger, umfassend:
einen Staubsauger-Hauptkörper (11), der eine Anzahl elektrischer Gebläse (15A, 15B) enthält;
eine Kontrollvorrichtung (16), die die elektrischen Gebläse unabhängig voneinander kontrollieren und ansteuern kann; und
eine Speichervorrichtung (55), die die kumulierten Betriebszeiten der elektrischen Gebläse speichert, wobei
die Kontrollvorrichtung (16) einen ersten Modus aufweist, in dem die anderen verbleibenden elektrischen Gebläse außer mindestens einem beliebigen elektrischen Gebläse betätigt werden, und einen zweiten Modus, in dem alle elektrischen Gebläse betätigt werden, und beim Umschalten aus dem zweiten Modus in den ersten Modus mindestens das elektrische Gebläse in Gang gesetzt wird, dessen in der Speichervorrichtung hinterlegte kumulierte Betriebszeit am kürzesten ist.

4. Elektrischer Staubsauger nach Anspruch 3, wobei die Kontrollvorrichtung beim Betriebsstart im ersten Modus zumindest das elektrische Gebläse betätigt, dessen in der Speichervorrichtung hinterlegte kumulierte Betriebszeit am kürzesten ist.

5. Elektrischer Staubsauger nach Anspruch 3 oder 4, wobei
die Kontrollvorrichtung die kumulierte Betriebszeit dadurch berechnet, dass sie eine Betriebszeit des elektrischen Gebläses korrigiert, indem sie die Betriebszeit an die Eingabe in den Betrieb anpasst.

## Revendications

1. Aspirateur électrique comprenant:
un corps principal d'aspirateur (11) logeant une pluralité de ventilateurs électriques (15A, 15B); et
un moyen de commande (16) pouvant commander l'entraînement des ventilateurs électriques indépendamment les uns des autres, dans lequel:
le moyen de commande (16) a un premier mode dans lequel des ventilateurs restants différents d'au moins l'un quelconque des ventilateurs électriques sont actionnés, et un second mode dans lequel la totalité des ventilateurs électriques sont actionnés, et lors du passage du second mode au premier mode, actionne au moins l'un quelconque des ventilateurs électriques qui n'ont pas été actionnés dans le premier mode précédent.

2. Aspirateur électrique selon la revendication 1, dans lequel:
le moyen de commande actionne au moins l'un quelconque des ventilateurs qui n'ont pas été actionnés dans le premier mode précédent chaque fois que le fonctionnement démarre dans le premier mode.

3. Aspirateur électrique comprenant:
un corps principal d'aspirateur (11) logeant une pluralité de ventilateurs électriques (15A, 15B);
un moyen de commande (16) pouvant commander l'entraînement des ventilateurs électriques indépendamment les uns des autres; et
un moyen de stockage (55) pour stocker des temps de fonctionnement cumulés des ventilateurs électriques, dans lequel:
le moyen de commande (16) a un premier mode dans lequel des ventilateurs restants différents d'au moins l'un quelconque des ventilateurs électriques sont actionnés et un second mode dans lequel la totalité des ventilateurs électriques sont actionnés, et lors du passage du second mode au premier mode, actionne au moins le ventilateur électrique dont le temps de fonctionnement cumulé stocké dans le moyen de stockage est le plus court.

4. Aspirateur électrique selon la revendication 3, dans lequel:
le moyen de commande actionne au moins le ventilateur électrique dont le temps de fonctionnement cumulé stocké dans le moyen de stockage est le plus court lorsque l'on démarre le fonctionnement dans le premier mode.

5. Aspirateur électrique selon la revendication 3 ou 4, dans lequel:
le moyen de commande calcule le temps de fonctionnement cumulé en corrigeant un temps de fonctionnement du ventilateur électrique en faisant correspondre le temps de fonctionnement à une entrée lors du fonctionnement.
